# EUROPEAN PATENT SPECIFICATION

(11) **EP 0 483 863 B1**
(45) Date of publication and mention of the grant of the patent: **03.01.1996**
(21) Application number: 91118644.3
(22) Date of filing: 31.10.1991
(51) Int. Cl.: C08L 27/06, C08K 5/00, F16F 1/36

(54) **Poly(vinyl chloride)-based resin composition**
Harzmischung auf der Basis von Polyvinylchlorid
Composition de résine à base de chlorure de polyvinyle

(30) Priority: 31.10.1990 JP 292105/90
(43) Date of publication of application: 06.05.1992
(73) Proprietor: TOSOH CORPORATION, Yamaguchi 746 (JP)
(72) Inventor: Higashiyama, Kazuyasu, Yokkaichi-shi Mie-ken (JP); Furukawa, Hiroaki, Yokkaichi-shi Mie-ken (JP)
(74) Representative: VOSSIUS & PARTNER

(56) References cited:
- CH-A- 246 479
- NL-A- 72 970
- US-A- 2 894 923

## Description

The present invention relates to a poly(vinyl chloride)-based resin composition excellent in the absorption performance of vibration energy, which is used for the purposes of increased velocity of actuating reaction or increased accuracy of measurement and improved tone quality by controlling the vibration in the fields of various transport instruments, precision electronic instruments, acoustic instruments, etc.

So far, as an absorber of vibration energy, butyl rubber has been most often used. Also, in recent, it has been found that polynorbornene, special urethane-based elastomers, etc. have higher performance and thus attracted attention. The primary evaluation of these vibration energy absorbers is made through the storage modulus (E') and the loss factor (tan δ = loss modulus (E")/storage modulus (E')) determinable from the viscoelastic measurement of those materials.

For vibration energy absorbers, the higher the loss factor, the better suitable it is, and , optimal values exist depending on the forms used for the storage modulus.

These two factors have usually a high temperature-dependency. That is, the storage modulus gradually decreases as the temperature rises and abruptly decreases usually in the temperature region exceeding the glass transition point. Moreover, the loss factor shows the highest value in the temperature region exceeding the glass transition point, but there is generally a decreasing trend in the temperature regions before and after it.

A criterion required for such vibration energy absorbers, therefore, has been in the fact hitherto that first the materials have a high loss factor in the temperature regions where they will be used. On the other hand, with respect to the storage modulus, it has been possible to match with the optimal value, since the value can be adjusted over considerable latitude by adding inorganic or metallic fillers, softeners, rubbers or the like. For this reason, butyl rubber, polynorbornene, special urethane-based elastomer, etc. show excellent loss factor values ; tan δ = 1.4, 2.8 and 1.3, respectively, at their maximum peaks. These materials, however, have difficulties with their processibility and moldability, leading to a limited use range.

On the other hand, poly(vinyl chloride) resins have a long history as being one of the five general-purpose resins and being established in almost all molding processes, without regards to the question of economics. In addition, it has merits of being an amorphous resin and easily compoundable with inorganic or metallic fillers and softeners.

The loss factor of poly(vinyl chloride) alone has a peak value of about 1.1 before and after 90 °C. However, if adding 100 parts by weight of DOP being a typical plasticizer to 100 parts by weight of resin, the peak temperature of the loss factor becomes about 5 °C and the peak value also decreases to as low as about 0.7.

This value is too low compared with those of the aforementioned rubbers and elastomers. Hence, a thermoplastic resin being excellent in its processibility and its economic values, also having an increased loss factor, is being desired.

The purpose of the invention is to provide a poly(vinyl chloride)-based resin composition with excellent absorption performance of vibration energy while retaining the special features of poly(vinyl chloride) resin.

As a result of diligent investigations in view of the status quo as described above, the inventors have reached the completion of the invention.

The invention relates to a poly(vinyl chloride)-based resin composition containing 5 to 100 parts by weight of a condensed polycyclic compound consisting of not less than three rings and/or a ring assemblage consisting of not less than three ring systems wherein said ring systems are directly linked such that the number of direct linkages between the ring systems is less by 1 than the number of ring systems contained, and said condensed polycyclic compound may have a functional group bound thereto; 5 to 200 parts by weight of a phthalic acid ester represented by the following general formula (1) 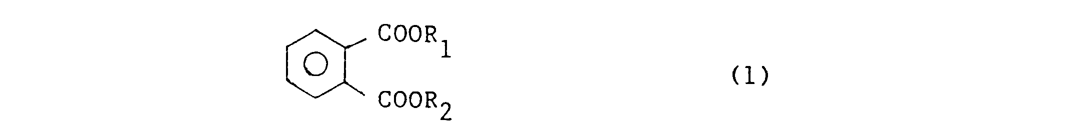 wherein each of R₁ and R₂ denotes a monocyclic hydrocarbon and 5 to 200 parts by weight of phosphoric acid ester represented by the following general formula (2) 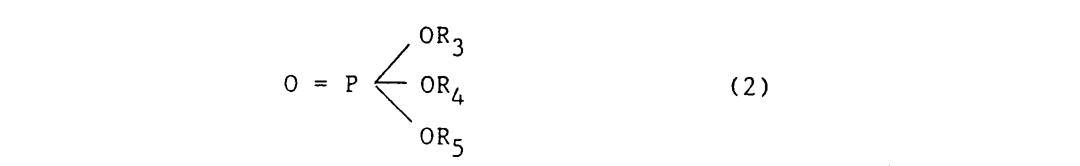 wherein each of R₃, R₄ and R₅ denotes an aromatic monocyclic hydrocarbon, per 100 parts by weight of the poly(vinyl chloride)-based resin; ; it also relates to said poly(vinyl chloride)-based resin composition which contains 3 - 200 parts by weight of petroleum resin per 100 parts by weight of poly(vinyl chloride)-based resin. Furthermore, the invention relates to an absorber of vibration energy comprising these compositions.

In following, the details will be illustrated.

The poly(vinyl chloride)-based resins to be used in the invention are homopolymerized resins of vinyl chloride, chlorinated vinyl chloride resins and copolymerized resins of vinyl chloride obtainable by random copolymerization or block copolymerization of a vinyl chloride monomer with one or more of all copolymerizable monomers (for example, vinyl acetate-vinyl chloride copolymer, ethylene-vinyl chloride copolymer, etc.) and include single articles of said resins and of mixtures of two or more kinds.

Moreover, the condensed polycyclic compounds to be used in the invention are condensed polycyclic hydrocarbons and condensed heterocyclic compounds constituted by not less than three rings. If including not less than three rings, any constitution may be employed without problem, but a higher number of rings is particularly preferred.

The ring assemblages to be used in the invention include not less than three ring systems (single rings or condensed rings) directly linked through single bonds or double bonds, wherein the number of such direct ring linkages is less by 1 than the number of ring systems contained. The ring systems may be cyclic hydrocarbon systems or heterocyclic systems. Moreover, in the mentioned not less than three ring systems, any constitution may be employed without problem, but the higher the number of ring systems is, the more preferred is the embodiment in particular. In these condensed polycyclic compounds and ring assemblages (hereinafter, referred to as cyclic substances collectively), functional groups such as alkyl groups with 1 to 4 carbon atoms, hydroxyl groups, oxo groups, carboxyl groups, amino groups, cyano groups, nitro groups, and halogen groups may be linked to rings. Moreover, since the cyclic substances are compounded with poly(vinyl chloride)-series resin, it is required to bring them into a state of sufficient dispersion. For this reason, the melting point of the cyclic substances is preferably lower than the processing temperature of poly(vinyl chloride)-series resin. For example, as the condensed polycyclic compounds, acenaphthylene, acenaphthene, phenanthrene, 9-phenanthrole, fluorene, anthrone, 9-fluorenone, perhydrofluorene, benzophenanthrene, 9-anthracenemethanol 9,10-dihydroanthracene, pyrene, 1,2-benzopyrene, dibenzophenanthrene, dibenzosuberane, terpenes with three or more rings, steroids, alkaloids, dibenzofuran, xanthene, 9-xanthenol, xanthone, acridine, dibenzothiophene, phenanthridine, 1,4-benzoquinone, 7,8-benzoquinoline, 1,10-phenanthroline, phenazine, phenoxazine, thianthrene, etc. can be mentioned. As the ring assemblages, 1,2-diphenylbenzene, 1,3-diphenylbenzene, 1,3,5-triphenylbenzene, 1,2,3,4-tetraphenyl 1,3-cyclopentadiene, 2,2:6',2"-terpyridine, etc. can be mentioned. Among such cyclic substances, one kind or mixtures of two or more kinds are compounded with the poly(vinyl chloride)-based resin. As regards the addition level of the cyclic substances, their desired presence is not less than 5 parts by weight to not more than 100 parts by weight, preferably not less than 15 parts by weight to not more than 50 parts by weight, per 100 parts by weight of poly(vinyl chloride)-based resin, when taking into account processibility and economics. When measuring the dynamic viscoelasticity of poly(vinyl chloride) alone at a frequency of 10 Hz, the maximum value of tan δ indicates 1.1 at about 90 °C, while, depending on the addition levels in this range, the maximum value of tan δ indicates around 1.2 to 2.5 within a temperature range of about 20 °C to 85 °C. This phenomenon can be understood from the teaching of relaxation phenomenon theory in that the homogenization of internal state of material has progressed to make the distribution of relaxation time narrow, but why such particular cyclic substances are specifically excellent is not clear.

On the other hand, these cyclic substances are very expensive, when compared with the conventional plasticizers. This has hindered their use as plasticizers. Further, the present invention relates to poly(vinyl chloride)-based resin compositions wherein a phthalic acid ester represented by the general formula (1) and a phosphoric acid ester represented by the general formula (2) are added to the above-mentioned resin composition; or to said compositions wherein petroleum resin is added together with the afore-mentioned phthalic acid ester and phosphoric acid ester. However, these additions do not lower the absorbing ability of vibration of the resin composition, but are suited to adjust the glass transition point thereof to an optional temperature.

The phthalic acid ester having a structure of the general formula (1) is a compound in which R₁ and R₂ consist of monocyclic hydrocarbons having C₃- C₈, respectively. R₁ and R₂ may be the same or different, and the hydrogen atoms on the ring may be substituted with other substituents. Specific examples are dicyclohexyiphchalate (DCHP), dimethylcyclohexylphthalate, diphenylphthalate, etc., preferably dicyclohexylphthalate. The addition amount of (1) from the point of view of workability and economy ranges from not less than 5 parts by weight to not more than 200 parts by weight per 100 parts by weight of the poly(vinyl chloride)-based resin. The addition amount from not less than 10 parts by weight to not more than 100 parts by weight is preferred.

The phosphoric acid ester having a structure of the general formula (2) is a compound in which R₃ - R₅ consist of aromatic monocyclic hydrocarbons having C₆ - C₉, respectively. R₃ - R₅ may be the same or different. The hydrogen atoms of the ring can be substituted with other substituents. Specific examples are tricresyl phosphate (TCP), trixylenyl phosphate (TXP), etc., trixylenyl phosphate being preferred. The addition amount of (2) ranges from not less than 5 parts by weight to 200 parts by weight per 100 parts by weight of poly(vinyl chloride)-based resin from the point of view of workability and economy. An addition amount of from not less than 10 parts by weight to not more than 100 parts by weight is preferred.

The sole use of phthalic acid ester of the general formula (1) causes a bleeding phenomenon, which can be, however, remarkably controlled by adding not less than 5 parts by weight of phosphoric acid ester of the general formula (2).

In the compositions like these, the temperature at which tan δ thereof indicates the maximum value can be decided over a broad range from room temperature to about 80 °C by adjusting the compounding amounts of the phthalic acid ester and the phosphoric acid ester,and the value can be held over 1.2, too. Thus, it can be said that these compositions are extremely utilizable as absorbers of vibration energy. Further, it becomes possible to further elevate the loss factor by also compounding a petroleum resin in addition to the above-mentioned phthalic acid ester and phosphoric acid ester.

The petroleum resin employed in the present invention is a product obtainable by polymerizing olefins of C₅ - C₉ by maintaining their blended state. Although the maximum value of the loss factor is increased with the addition of the petroleum resin, the degree of improvement is, however, considerably different, depending on the composition and molecular weight of the petroleum resin. In other words, those containing not less than 50 parts by weight of indene and styrene as C₉ components are preferred for the petroleum resin, and further it is preferred that the styrene content is over the half in the ratio between indene and styrene. Moreover, it is more preferred that the number average molecular weight range is from not less than 500 to not more than 1500. Deviation from this range may cause a drop in value of the loss factor. The addition amount of the petroleum resin is from not less than 3 parts by weight to not more than 200 parts by weight, preferably from not less than 10 parts by weight to 100 parts by weight per 100 parts by weight of poly(vinyl chloride)-based resin. In case less than 3 parts by weight are used, the loss factor is not sufficiently improved. The addition beyond 200 parts by weight leads to an extreme drop in workability.

If required, plasticizers such as DOP and dioctyl sebacate (DOS), which are usually added to poly(vinyl chloride) resins, inorganic fillers (represented by calcium carbonate, talc, etc.), flame retardants (represented by antimony trioxide and zinc borate), flaky fillers (represented by mica and graphite), which are often used for the absorbers of vibration energy, and the like, can be added to the poly(vinyl chloride)-based resin composition according to the invention, provided the capability of the composition will not be extremely lowered.

Moreover, if necessary, the composition of the invention can be blended with NBR (acrylonitrile-butadiene rubber), EVA (ethylene-vinyl actetate copolymer), acrylic resin, etc., which compounds are usually used for the modification of poly(vinyl chloride) resin. Furthermore, it can be blended with a cumarone resin, xylene resin, etc., which resins are often used for absorbers of vibration energy.

The poly(vinyl chloride)-based resin compositions according to the invention can be freely molded by using methods such as calendering, extrusion, injection molding, foam molding, compression molding, etc., which represent conventional molding processes of poly(vinyl chloride) resins.

The vibration energy absorbers obtainable according to the invention can be used for supporting members of machines and instruments, such as precision electronic machines and instruments, precision measurement machines and instruments, etc., i.e. in cases where accuracy is liable to be affected by vibration, for fixing members of packing, gasket, etc., laminating members of acoustic machines and instruments, etc., or for the chassis and so on. Further they can be used for the purpose of suppressing the vibration by directly positioning the absorbers into the locations of intense vibration of cars, industrial instruments, etc., and by preventing the propagation of vibration from the floor by using them on the legs of precision instruments. In addition, they can also be used as composite material with other materials such as metallic materials, e.g. stainless stell plates, aluminum plates, etc. and with woody and inorganic materials.

In the following, the invention will be illustrated using examples, but the invention is not confined to these examples.

### Example 1

Hundred parts by weight of ethylene-vinyl chloride copolymer (Ryulon^{®} E-2800, made by Tosoh Corp.), 20 parts by weight of phenanthrene as a condensed polycyclic compound, 5 parts by weight of OG-756 (made by Mizusawa Industrial Chemicals, Ltd.) as a stabilizer and 7 parts by weight of antimony trioxide (ATOX-S, made by Nippon Seiko K.K.) as a flame retardant, 35 parts by weight of dicyclohexyl phthalate (DCHP, made by Osaka Organic Chemical Industry , Ltd.) and 40 parts by weight of trixylenyl phosphate (TXP, made by Daihachi Chemical Industry Co., Ltd.) were added, and the mixture was mixed and kneaded with rolls for five minutes at a temperature of 160 °C to give the desired composition.

### Example 2

A mixture of 100 parts by weight of vinyl chloride-urethane graftpolymerization resin (Dominas^{®} K-800F, made by Tosoh Corporation), 20 parts by weight of 1,3-diphenylbenzene for the ring assemblage, 20 parts by weight of dicyclohexyl phthalate (DCHP, made by Osaka Organic Chemical Industry, Ltd.),

10 parts by weight of trixylenyl phosphate (TXP, made by Daihachi Chemical Industry Co., Ltd.), 1 part by weight of a liquid barium-zinc series stabilizer (6227, made by Akishima Chemical Industries Co., Ltd.), 2.6 parts by weight of a granular barium-zinc series stabilizer (6226, made by Akishima Chemical Industries Co., Ltd.), 0.6 part by weight of a phosphorous acid ester series stabilizer (4342, made by Akishima Chemical Industries Co., Ltd.) for thermal stabilization were mixed and kneaded with rolls for 5 minutes at a temperature of 150 °C to give the desired composition.

### Comparative Example 1

Except that 40 parts by weight of di-2-ethylhexyl phthalate (Vinycizer^{®} 80, made by Kao Corporation) were employed instead of trixylenyl phosphate in the composition of Example 1, the quite similar operation was carried out to give the desired composition.

### Example 3

A mixture of 87 parts by weight of poly(vinyl chloride) resin (Ryulon^{®} TH-1000, made by Tosoh Corporation), 13 parts by weight of ethylene-vinyl chloride copolymer (Ryulon^{®} E-2800, made by Tosoh Corporation), 39 parts by weight of petroleum resin (Peto-coal^{®} LX-T, made by Tosoh Corporation), 20 parts by weight of pyrene as the condensed polycyclic compound , 40 parts of dicyclohexyl phthalate (DCHP, made by Osaka Organic Chemical Industry, Ltd.), 75 parts by weight of di-2-ethylhexyl phthalate (vinycizer^{®} 80, made by Kao Co., Ltd.), 27.5 parts by weight of trixylenyl phosphate (TXP, made by Daihachi Chemical Industry Co., Ltd.), 5 parts by weight of OG-756 (made by Mizusawa Industrial Chemicals Ltd.) as the stabilizer, 7 parts by weight of antimony trioxide (ATOX-S, made by Nihon Seiko Co., Ltd.) as the flame retarder, and 200 parts by weight of calcium carbonate (Whiton^{®} p-30, Shiraishi Calcium Co., Ltd.), and 40 parts by weight of mica (Suzolite^{®} mica 150-S, made by Kuraray Co., Ltd.) as the inorganic filler weremixed and kneaded for 5 minutes at a temperature of 140 °C to give the desired composition.

### Example 4

Except that 20 parts by weight of petroleum resin (Petcoal^{®} LX-T, made by Tosoh Corporation) and 10 parts by weight of hydrogenated rosin ester (KE-311, made by Arakawa Kagaku Kogyo Co., Ltd.) were further added into the composition of Example 2, the quite same operation was carried out to give the desired compsition.

### Comparative Example 2

Example 3 was repeated except that the amounts of dicyclohexyl phthalate and of di-2-ethylhexyl phthalate were altered to 0 and 47.5 parts by weights, respectively. Besides the quite same system was mixed, followed by the same operation, to give the desired composition.

### Evaluation of the loss factor (tanδ)

Each of the compositions obtained by Examples and Comparative Examples was pressed at 180 °C to produce a sheet of 0.2 mm in thickness, respectively. With employment of this sheet, using a viscoelasticity analyzer RSA II (made by Rheometrix Far East Co.) being a measurement device based on the nonresonance type forced vibration method, the loss factor was measured at a temperature-rising velocity of 2 °C/min and a measurement frequency of 10 Hz. The peak value of the loss factor at this time and the temperature at that time are shown in Table 1.

**Table 1**

| | Peak value of loss factor | Peak temperature |
|---|---|---|
| Example 1 | 1.35 | 21 |
| Example 2 | 1.25 | 15 |
| Example 3 | 1.75 | 35 |
| Example 4 | 1.32 | 28 |
| Comparative Example 1 | 0.98 | 15 |
| Comparative Example 2 | 1.18 | 17 |

As evident from the illustration above, in accordance with the invention, an absorber of vibration energy having a high loss factor over an optional temperature range can be obtained by compounding poly(vinyl chloride)-based resin with condensed polycyclic compound consisting of not less than three rings and/or a ring assemblage consisting of not less than three ring systems. with addition of the specific phthalic acid ester, phosphoric acid ester and further petroleum resin in a particular proportion.

## Claims

1. A poly(vinyl chloride)-based resin composition containing 5 to 100 parts by weight of a condensed polycyclic compound consisting of not less than three rings and/or a ring assemblage consisting of not less than three ring systems wherein said ring systems are directly linked such that the number of direct linkages between the ring systems is less by 1 than the number of ring systems contained, and said condensed polycyclic compound may have a functional group bound thereto; 5 to 200 parts by weight of a phthalic acid ester represented by the following general formula (1) 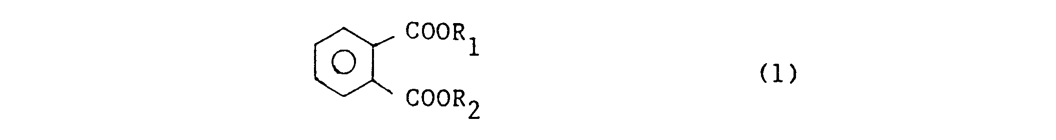 wherein each of R₁ and R₂ denotes a monocyclic hydrocarbon and 5 to 200 parts by weight of phosphoric acid ester represented by the following general formula (2) 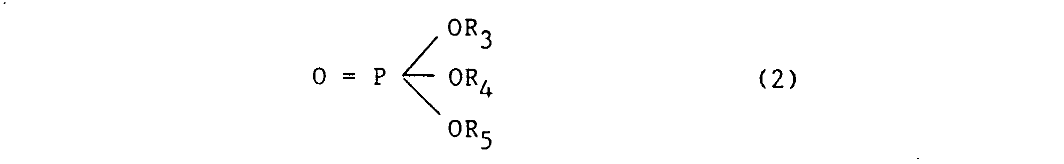 wherein each of R₃, R₄ and R₅ denotes an aromatic monocyclic hydrocarbon, per 100 parts by weight of the poly(vinyl chloride)-based resin.

2. The poly(vinyl chloride)-based resin composition described in claim 1, which contains 3 - 200 parts by weight of petroleum resin per 100 parts by weight of poly(vinyl chloride)-based resin.

3. An absorber of vibration energy comprising the poly(vinyl chloride)-based resin composition described in claim 1 or 2.

4. Use of the poly(vinyl chloride)-based resin composition described in claim 1 or 2, in absorbers of vibration energy.

## Patentansprüche

1. Harzzusammensetzung auf der Basis von Polyvinylchlorid, die 5 bis 100 Gewichtsteile einer kondensierten polycyclischen Verbindung, die aus mindestens drei Ringen und/oder einem aus mindestens drei Ringsystemen bestehenden Ringverband besteht, in dem die Ringsysteme direkt miteinander verknüpft sind, so daß die Anzahl direkter Verknüpfungen zwischen den Ringsystemen um 1 kleiner ist als die Anzahl der enthaltenen Ringsysteme, wobei die kondensierte polycyclische Verbindung eine funktionelle Gruppe tragen kann; 5 bis 200 Gewichtsteile eines Phthalsäureesters der folgenden allgemeinen Formel (1) 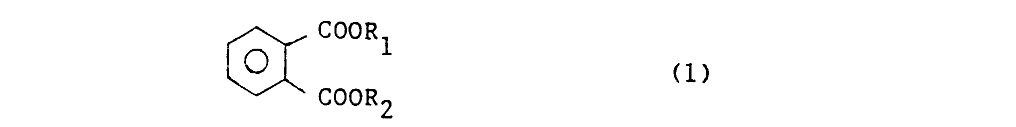 in der sowohl R₁ als auch R₂ ein monocyclischer Kohlenwasserstoff ist, und 5 bis 200 Gewichtsteile eines Phosphorsäureesters der folgenden allgemeinen Formel (2) 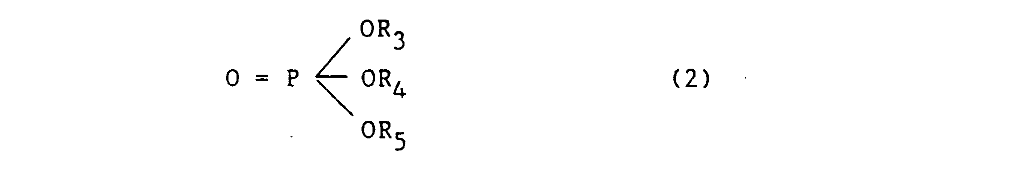 in der R₃, R₄ und R₅ jeweils einen aromatischen, monocyclischen Kohlenwasserstoff darstellen, pro 100 Gewichtsteile des Harzes auf der Basis von Polyvinylchlorid enthält.

2. Harzzusammensetzung auf der Basis von Polyvinylchlorid nach Anspruch 1, die 3 - 200 Gewichtsteile Petroleumharz pro 100 Gewichtsteile des Harzes auf der Basis von Polyvinylchlorid enthält.

3. Absorber von Schwingungsenergie, der die in Anspruch 1 oder 2 beschriebene Harzzusammensetzung auf der Basis von Polyvinylchlorid umfaßt.

4. Verwendung der in Anspruch 1 oder 2 beschriebenen Harzzusammensetzung auf der Basis von Polyvinylchlorid in Absorbern von Schwingungsenergie.

## Revendications

1. Composition de résine à base de poly(chlorure de vinyle), contenant 5 à 100 parties en poids d'un composé polycyclique condensté consistant en pas moins de trois cycles et/ou en un assemblage de cycles consistant en pas moins de trois systèmes cycliques, lesdits systèmes cycliques étant directement reliés de manière que le nombre de liaisons directes entre les systèmes cycliques soit inférieur d'une unité au nombre de systèmes cycliques contenus, et ledit composé polycyclique condensé pouvant avoir un groupe fonctionnel fixé sur lui ; 5 à 200 parties en poids d'un ester d'acide phtalique représenté par la formule générale (1) suivante : 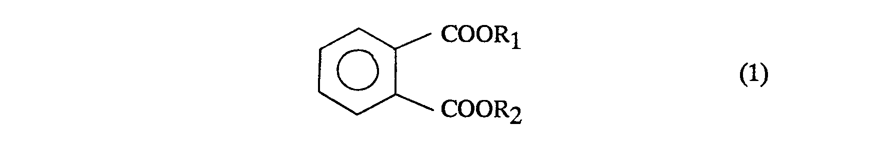 dans laquelle chacun des R₁ et R₂ désigne un groupe hydrocarboné monocyclique, et 5 à 200 parties en poids d'un ester de l'acide phosphorique représenté par la formule générale (2) suivante : 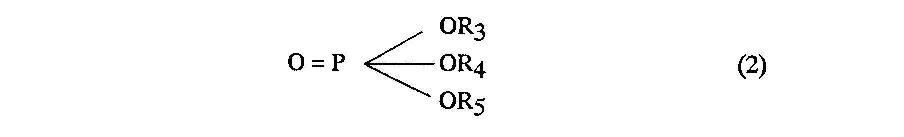 dans laquelle chacun des symboles R₃, R₄ et R₅ désigne un groupe hydrocarboné monocyclique aromatique, pour 100 parties en poids de la résine à base de poly(chlorure de vinyle).

2. Composition de résine à base de poly(chlorure de vinyle) décrite à la revendication 1, qui contient 3 à 200 parties en poids de résine de pétrole pour 100 parties en poids de résine à base de poly(chlorure de vinyle).

3. Agent ou organe d'absorption de l'énergie vibratoire, comprenant la composition de résine à base de poly(chlorure de vinyle) décrite à la revendication 1 ou 2.

4. Utilisation de la composition de résine à base de poly(chlorure de vinyle), décrite à la revendication 1 ou 2, dans des organes ou agents d'absorption de l'énergie de vibration.
